# EUROPÄISCHE PATENTSCHRIFT

(11) **EP 1 258 276 B1**
(45) Veröffentlichungstag und Bekanntmachung des Hinweises auf die Patenterteilung: **26.10.2005**
(21) Anmeldenummer: 02405392.8
(22) Anmeldetag: 15.05.2002
(51) Int. Cl.: B01D 29/05, B01D 29/60, B01D 29/66, B01D 29/72

(54) **Verfahren und Einrichtung zur Filtration von Fluiden, die in Bearbeitungsmaschinen anfallen**
Method and device for filtration of fluids from manufacturing machines
Procédé et dispositif pour la filtration de fluides produits par des machines d' usinage

(30) Priorität: 15.05.2001 CH 8942001
(43) Veröffentlichungstag der Anmeldung: 20.11.2002
(73) Patentinhaber: Koch Maschinenfabrik AG, 9630 Wattwil (CH)
(72) Erfinder: Koch, René, 8840 Einsiedeln (CH)
(74) Vertreter: Kulhavy, Sava

(56) Entgegenhaltungen:
- WO-A-93/14854
- WO-A-98/56487
- DE-A- 3 811 706
- DE-B- 1 117 084
- GB-A- 2 208 611
- US-A- 3 478 883

## Beschreibung

Die Erfindung betrifft ein Verfahren zur Filtration eines Materialpartikel enthaltenden Fluids, in welchem das Fluid durch eine horizontal angeordnete Filtermembrane geführt wird, wobei die Materialpartikel an der Unterseite der Filtermembrane gesammelt werden, und in welchem eine Rückspülung der Filtermembrane mit einem Teil des bereits gefilterten Fluids nach dem Erreichen einer vorgegebenen Konzentration von Partikeln in der Schicht an der Unterseite der Filtermembrane durchgeführt wird sowie eine Einrichtung zur Durchführung dieses Verfahrens.

In Bearbeitungsmaschinen, wie z.B. in Elektroerosionsmaschinen oder in mechanischen Bearbeitungsmaschinen, wie z.B. in Schleifmaschinen, fallen Fluide, beispielsweise Spülflüssigkeiten an, welche Partikel des in der Maschine bearbeiteten Materials, beispielsweise eines Metalls enthalten. Aus mehreren Gründen ist es erforderlich oder zumindest zweckmässig, die Partikel vom Fluid zu separieren. Dies kann beispielsweise durch Feinfiltrieren des so angereicherten Fluids erreicht werden. Zum Stand der Technik gehören drei gebräuchliche Feinfiltermethoden.

Bei einer ersten dieser Filtermethoden werden die im Fluid schwebenden Schmutzpartikel auf ein Filterelement angeschwemmt. Ist das Filterelement verschmutzt, d.h. erreicht der Filter nicht mehr die geforderten Durchflusswerte, so wird das Filterelement ausgewechselt. Als Beispiel für ein solches Filterelement kann eine Papierfilterkartusche genannt werden. Diese Feinfiltermethode lässt sich nur bei sehr kleinen Schmutzmengen anwenden. Bei grösseren Mengen ist diese Feinfiltermethode sehr kostenintensiv und unökologisch, da grosse Abfallmengen anfallen.

Als eine zweite Feinfiltermethode kommt die Tiefenfiltration in Frage. Bei dieser Methode werden die Partikel auf ein Schüttgut angeschwemmt. Sobald die nötigen Durchflusswerte nicht mehr erreicht werden können, beginnt ein Rückspülprozess des Schüttgutes mit einem Teil des bereits gefilterten Fluids. (Permeat) die Feinheit der Filtration ist gleich nach dem Rückspülprozess meistens ungenügend und sie nimmt mit der Betriebszeit des Filters zu. Im Zeitpunkt, in dem die Filtrationsfeinheit ein Optimum erreicht, muss wieder zurückgespült werden, weil die erforderlichen Durchflusswerte nicht mehr erreicht werden können. Als Beispiel für das zur Durchführung dieser Methode geeigneten Filterelement kann der Sandfilter genannt werden. Mit diesem Filter kann jedoch keine gleichbleibende bzw. gleichmässige Filtrationsfeinheit erreicht werden und deswegen ist diese Art von Filter für viele Anwendungen nicht geeignet.

Bei einer dritten Methode bedient man sich des sogenannten Spaltfilterprinzips. Bei dieser Methode werden die Partikel ebenfalls angeschwemmt. Wird der geforderte Durchfluss nicht mehr erreicht, wird der Schmutz abgeklopft, abgestreift, usw. Diese Methode erreicht in vielen Fällen nicht die geforderte Filtrationstiefe, oder das separierte Material verstopft die Anschwemmseite oder verpapt auf der Anschwemmseite.

In DE 3811706 A1 ist ein Flüssigkeitsfilterapparat beschrieben, bei dem das verschmutzte Medium (Primärkreislauf) in einer verhältnismässig breiten und flachen Kammer an einem ebenen Filterelement entlang strömt und nur ein Bruchteil der Flüssigkeit durch das Filterelement strömt. Der Abstand zwischen dem Filterelement und dem Ultraschallapplikator wird beim Rückspülen verringert. Dieser Apparat hat den Vorteil, dass die zum Teil durch die Ultraschalleinwirkung zerrieben Teilchen nicht durch das Filterelement fliessen, sondern durch die hohe Fliessgeschwindigkeit des Primärstroms mitgerissen werden. Der Ultraschalltransduktor ist auf der Schmutzseite angeordnet. Es entsteht eine Aufkonzentrierung des verschmutzten Fluids. Die kostengünstige Weiterverarbeitung von aufkonzentrierten Flüssigkeiten kann ein technisches Problem darstellen und ist bei diesem Apparat nicht befriedigend gelöst.

In der Auslegeschrift DE 1 117 084 B ist eine rückspülbare Filteranlage für Flüssigkeiten offenbart. In einer Saugleitung wird ein Filtergehäuse eingebaut. Das Filtergehäuse ist in zwei Räume unterteilt, und zwar in einen Filterraum und einen darunterliegenden Rohflüssigkeitsraum. Der Filter trennt die Räume. Die partikelhaltige Flüssigkeit fliesst seitlich in den Rohflüssigkeitsraum ein und die schwersten Partikel setzten sich auf dem Boden des Raumes ab. Danach strömt die Flüssigkeit von unten durch den Filter. Die gefilterte Flüssigkeit verlässt den Filterraum oben. Mit einer geringen Menge gefilterten Flüssigkeit wird eine Rückspülung durchgeführt. Die bei der Rückspülung aus dem Filter herausgespülten Feststoffteilchen setzten sich ebenfalls am Boden des Rohflüssigkeitsraums ab. Die Ablagerungen an Verunreinigungen werden von Zeit zu Zeit durch Öffnen des abnehmbaren Filterbodens entfernt. Der Rohflüssigkeitsraum muss genügend gross bemessen sei, damit die Fliessgeschwindigkeit minimal wird und die Ablagerungen nicht durch die bewegte Flüssigkeit aufgewirbelt werden und erneut an den Filter gelangen. Beim Entfernen der Verunreinigungen muss mindestens die Flüssigkeitsmenge, welche sich im Rohflüssigkeitsraum befindet, aufgefangen werden.

Die Aufgabe der vorliegenden Erfindung ist, ein Verfahren und eine Einrichtung zu schaffen, bei welchen die genannten Nachteile nicht vorkommen. Das Verfahren und die Einrichtung sollen ferner eine konstante Filtrationsfeinheit sowie eine kostengünstige und ökologische Reinigung des Filterelements ermöglichen.

Diese Aufgabe wird beim Verfahren der eingangs genannten Gattung erfindungsgemäss so gelöst, wie dies im kennzeichnenden Teil des Patentanspruchs 1 definiert ist. Diese Aufgabe wird erfindungsgemäss ferner durch eine Einrichtung gelöst, welche im Patentanspruch 6 definiert ist.

Nachstehend werden Ausführungsformen der vorliegenden Erfindung anhand der beiliegenden Zeichnungen näher erläutert. Es zeigt:
Fig.1 den wesentlichen Teil der vorliegenden Einrichtung in einem vertikalen Schnitt,
Fig. 2 vergrössert einen ersten Ausschnitt aus Fig. 1,
Fig. 3 vergrössert einen zweiten Ausschnitt aus Fig. 1,
Fig. 4 vergrössert einen Ausschnitt aus Fig. 2,
Fig. 5 eine weitere Ausführung einer Tragvorrichtung, welche einen der Bestandteile der Einrichtung gemäss Fig. 1 darstellt,
Fig. 6 vergrössert und in einem vertikalen Schnitt, einen Tragring für eine Filtermembrane der vorliegenden Einrichtung,
Fig. 7 in einer Seitenansicht eine weitere Ausführung der vorliegenden Einrichtung, welche mehrere Einheiten der Einrichtung gemäss Fig. 1 aufweist, und
Fig. 8 in einer zweiten Seitenansicht die Einrichtung aus Fig. 7.

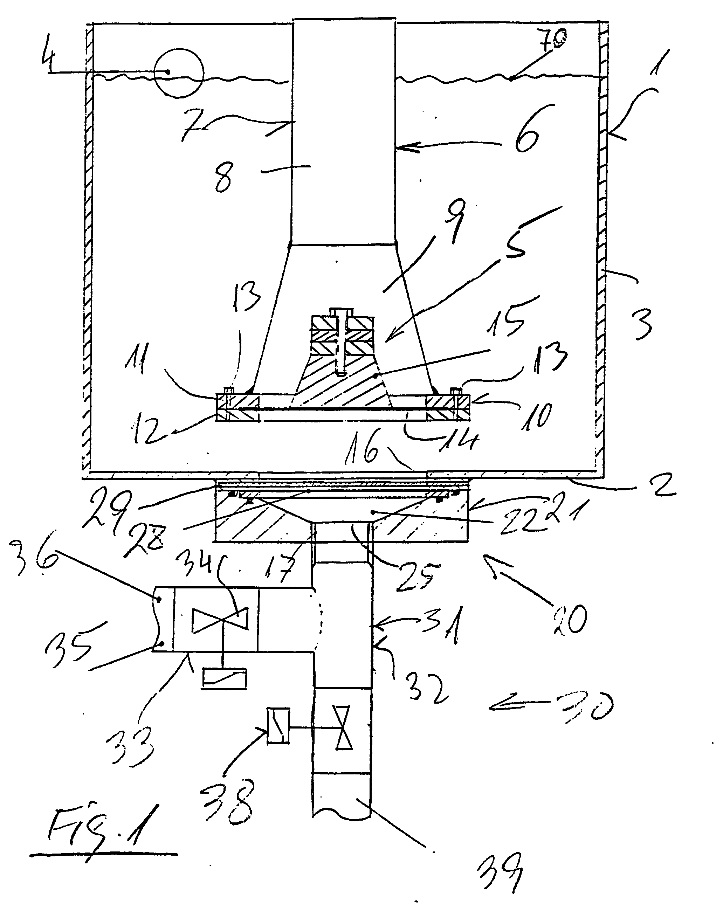

Die vorliegende Einrichtung kann beispielsweise als ein Öl- oder Emulsionsfilter verwendet werden. Diese Einrichtung umfasst einen Behälter 1 (Fig. 1, 7 und 8) für das bereits filtrierte Fluid, wobei dieser Behälter auch als Permeatbehälter bezeichnet werden kann. Dieser Behälter 1 weist einen Boden 2 sowie eine sich vom Boden 2 empor erstreckende Wand 3 auf. Wenn der Boden 2 eine kreisförmige Kontur hat (Fig. 1), dann hat die Behälterwand 3 die Form eines Zylindermantels. Im oberen Bereich des Permeatbehälters 1 ist eine Ausflussöffnung 4 in der Behälterwand 3 ausgeführt, an welche eine nicht dargestellte Leitung angeschlossen sein kann. Durch diese Ausflussöffnung 4 verlässt das zur Wiederverwendung gereinigte Permeat den Permeatbehälter 1. Mit 70 ist der Spiegel einer im Permeatbehälter 1 befindlichen Flüssigkeit angedeutet. Im Boden 2 des Permeatbehälters 1 ist zumindest eine Öffnung 16 ausgeführt. In den dargestellten Fällen hat diese Bodenöffnung 16 eine kreisförmige Kontur.

Die vorliegende Einrichtung weist auch elektronische Steuermittel (nicht dargestellt) auf, welche die Zusammenarbeit unter den einzelnen Bestandteilen dieser Einrichtung steuern können. Diese Steuermittel können einer an sich bekannten Art sein.

Im Inneren des Permeatbehälters 1 ist ein Ultraschallschwinger (Ultraschallquelle) 5 angeordnet, und zwar derart, dass das Permeat diesen Schwinger 5 nicht unmittelbar berühren kann und dass der Schwinger 5 dennoch auf die betreffenden Bestandteile der vorliegenden Einrichtung einwirken kann. Zur Halterung des Ultraschallschwingers 5 im Permeatbehälter 1 und auf einem gewünschten Niveau gegenüber dem Behälterboden 2 ist eine Tragvorrichtung 6 vorgesehen. Im in Fig. 1 dargestellten Fall umfasst diese Tragvorrichtung 6 einen im wesentlichen rohrförmigen Grundkörper 7, welcher praktisch vertikal verläuft. Dieser Grundkörper weist ein erstes bzw. oberes Rohr 8 mit einem zylinderförmigen Mantel sowie ein zweites Rohr 9, welches die Form des Mantels eines Konusses hat. Der Durchmesser der kleineren Grundfläche des Konusstückes 9 entspricht dem Durchmesser des ersten bzw. oberen Rohres 8 und diese kleinere Mündung des konusförmigen Rohrstückes 9 ist an das untere Ende des Rohrstückes 8 angeschlossen. An die den grösseren Durchmesser aufweisende Mündung des Konusstückes 9 schliesst sich ein Rahmen 10 an.

Das andere Ende des zylinderförmigen Rohrstückes 8 der Tragvorrichtung 6 ist im oberen Bereich des Permeatbehälters 1 gehalten. Die oben liegende Endpartie der Tragvorrichtung 6 bzw. des oberen Rohrstückes 8 ist entweder an der Behälterwand 3 oder an einem Deckel (nicht dargestellt) befestigt, welcher auf der Behälterwand 3 sitzt. Die Halterung der Tragvorrichtung 6 kann Führungs- und Antriebsmittel für das Rohrstück 8 aufweisen (nicht dargestellt), welche eine gesteuerte Änderung der vertikalen Lage der Tragvorrichtung 6 ermöglicht. Da die vertikale Lage des Tragrohres 8 verstellbar ist, kann der Abstand des Rahmens 10 gegenüber dem Boden 2 des Permeatbehälters 1, je nach Medium, durch eine vertikale Bewegung der Tragvorrichtung 6 geändert werden.

Der Rahmen 10 ist im dargestellten Fall kreisförmig und er weist zwei aufeinander aufliegende Ringe 11 und 12 (Fig. 1, 2 und 4) auf, welche im dargestellten Fall mit Hilfe von Schrauben 13 miteinander verbunden sind. Die Verbindung der Ringe 11 und 12 könnte aber auch mit Hilfe einer Spannbride oder ähnlich erfolgen. Die Oberseite des oben liegenden Ringes 11 ist an die untere, grössere Mündung des Konusrohres 9 angeschlossen, beispielsweise durch Schweissen.

Die Tragvorrichtung 6 ist von oben her in den Permeatbehälter 1 eingesetzt, und zwar derart, dass der Rahmen 10 sich in der Nähe der Oberseite des Bodens 2 des Permeatbehälters 1 befindet und dass die Stirnseite des Rahmens 10 dabei praktisch parallel zum Behälterboden 2 verläuft. Die Ultraschallquelle 5 ist somit an jenem Ende der Tragvorrichtung 6 angeschlossen, welches sich im Inneren des Permeatbehälters 1 befindet und welches zum Behälterboden 2 näher liegt.

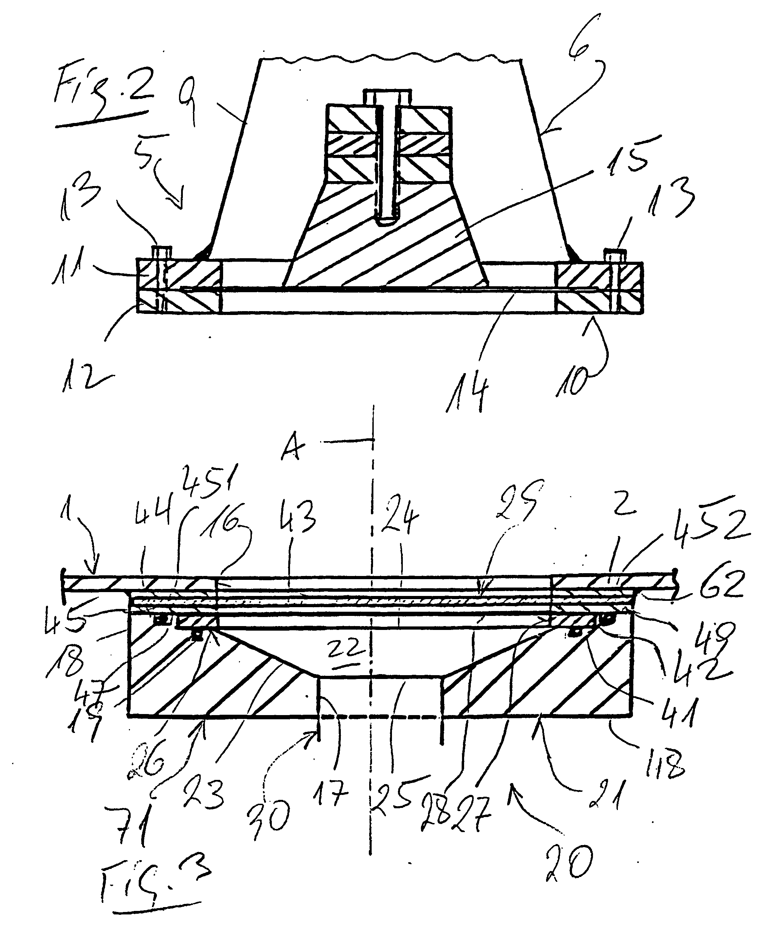

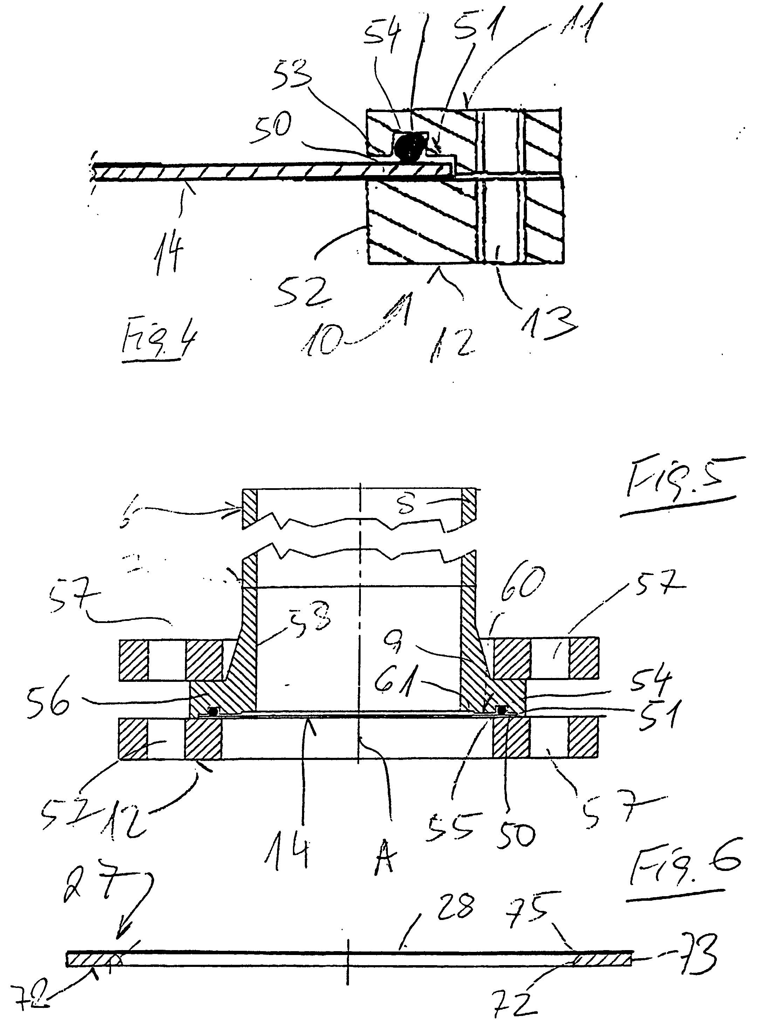

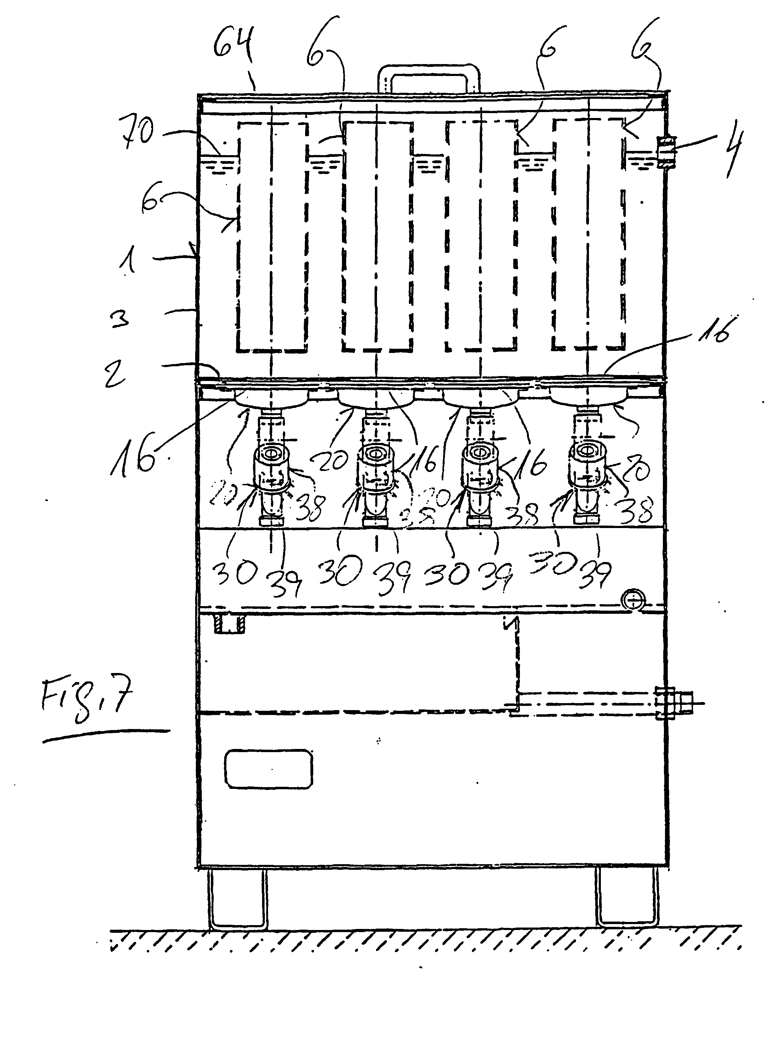

Im Rahmen 10 der Tragvorrichtung 6 ist eine Membrane 14 gehalten. Diese Membrane 14 kann als eine Blechscheibe ausgeführt sein, deren Randpartie 50 zwischen den Ringen 11 und 12 geklemmt ist. Fig. 4 zeigt in einem vertikalen Schnitt und vergrössert einen Ausschnitt aus der Klemmpartie der Tragvorrichtung 6, welche in Fig. 2 dargestellt ist. Der Durchmesser der Membrane 14 ist kleiner als der äussere Durchmesser der Klemmringe 11 und 12. In der Unterseite des oberen Klemmringes 11 ist ein umlaufender Absatz 51 ausgeführt, wobei dieser Absatz 51 sich an die Innenwand 52 des Ringes 11 anschliesst. Die Höhe bzw. die Tiefe dieses Absatzes 51 entspricht oder ist etwas grösser als die Dicke der Randpartie 50 der Membrane 14. Im Boden 53 des Absatzes 51 ist eine umlaufende Rille 54 ausgeführt, in welcher ein O-Ring 55 aus einem nachgiebigen Material eingelegt ist. Die Höhe dieses O-Ringes 55 ist etwas grösser als die Tiefe der Rille 54, sodass ein Abschnitt des O-Ringes 55 aus der Rille 54 hervorsteht. Zwischen dieser hervorstehenden Partie des O-Ringes 55 und dem unteren Haltering 12 ist die Randpartie 50 der Membrane 14 geklemmt.

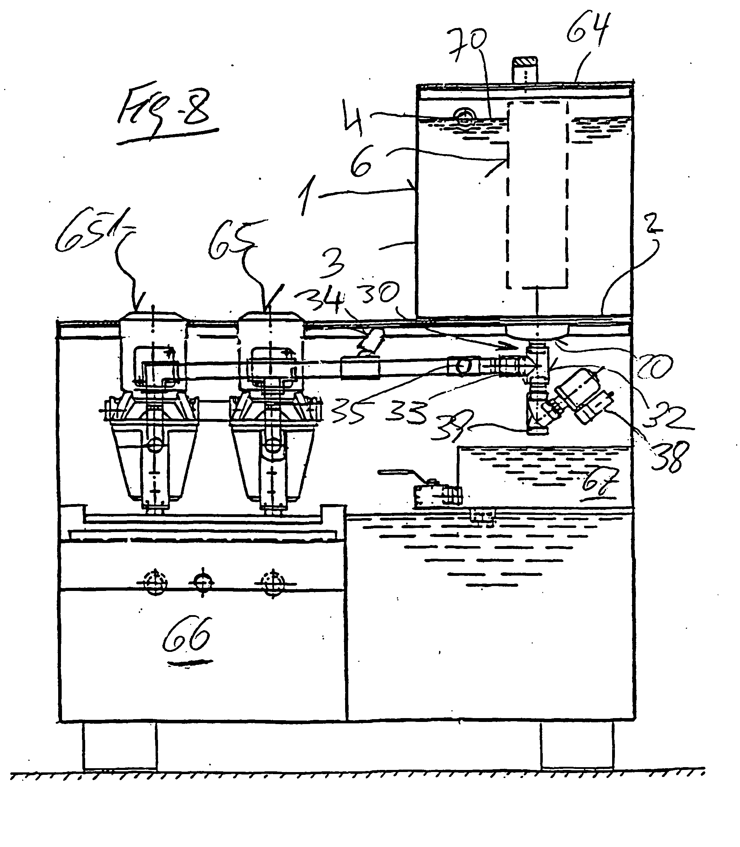

Fig. 5 in einem vertikalen Schnitt eine weitere Ausführungsmöglichkeit der Tragvorrichtung 6. Die Aussenseite des die grössere Grundfläche umfassenden Abschnittes des Konusses 9 ist mit einem Flansch 56 versehen dessen äusserer Durchmesser kleiner ist als der äussere Durchmesser sowohl des oberen Klemmringes 11 als auch des unteren Klemmringes 12. Im ausserhalb des äusseren Durchmessers des Flansches 56 liegenden Bereich der Klemmringe 11 und 12 sind sich entsprechende Öffnungen 57 ausgeführt, durch welche Schrauben 13 hindurchgehen können. Mit Hilfe solcher Schrauben 13 ist der Flansch 56 zwischen den Ringen 11 und 12 geklemmt.

Im sich an die Innenfläche 58 des etwa rohrförmigen Grundkörpers 7 der Tragvorrichtung 6 anschliessenden Bereich der Stirnfläche des Flansches 56 ist ein im Querschnitt etwa treppenartig verlaufender, umlaufender Absatz 60 ausgeführt. Die erste Stufe 61 dieses Absatzes 60 liegt näher zur Innenfläche 58 des rohrförmigen Grundkörpers 7. Die Ausbildung der zweiten Stufe des treppenartigen Absatzes 60 entspricht weitestgehend der Ausbildung des im Zusammenhang mit Fig. 4 beschriebenen Absatzes 51. Diese zweite Absatzstufe 51 liegt hinsichtlich der Innenwand 58 des Rohr-Grundkörpers 7 erst hinter der ersten Absatzstufe 61. Die erste Absatzstufe 61 ist tiefer bzw. höher als die zweite Absatzstufe 51. In dieser zweiten Absatzstufe 54 ist die ebenfalls bereits beschriebene umlaufende Rille 54 ausgeführt, in welcher der O-Ring 55 gelagert ist. Zwischen diesem O-Ring 55 und der Oberseite des unteren Klemmringes 12 ist die Randpartie 50 der Blechmembrane 14 geklemmt. Die erste Absatzstufe 61 ist deswegen höher als die zweite Absatzstufe 51, weil die Membrane 14 ausserhalb des Klemmbereiches 51 an ihrem Schwingverhalten nicht behindert werden soll.

Etwa in der Mitte der Membrane 14 ist ein Ultraschallschwinger 5 befestigt. Diese Befestigung kann am einfachsten durch Kleben bewerkstelligt werden. Der Ultraschallschwinger 5 kann auf der diesen Schwinger 5 tragenden Membrane 14 auch aufgeschraubt sein. Der Ultraschallschwinger 5 kann einer an sich bekannten Art sein. Er kann beispielsweise Platten aus einem piezoelektrischen Material aufweisen, welche beim Anlegen einer Spannung mit entsprechender Frequenz Untraschallwellen erzeugen können. Die Ultraschallquelle 5 ist über ein Kabel an einen Generator von Ultraschallschwingungen angeschlossen (nicht dargestellt), welcher sich ausserhalb des Permeatbehälters 1 befindet. Das Kabel geht durch den Hohlraum im Grundkörper 7 der Tragvorrichtung 6 hindurch, wobei das eine Ende dieses Kabels an den Generator angeschlossen. Das andere Ende des Kabels ist an den Ultraschallschwinger 5 angeschlossen.

Die vorliegende Einrichtung umfasst ferner zumindest eine Filtervorrichtung 20, welche im Bereich des Bodens 2 des Permeatbehälters 1 angeordnet ist. Die Filtervorrichtung 20 ist der Öffnung 16 im Boden 2 des Permeatbehälters 1 zugeordnet. Die Filtervorrichtung 20 umfasst zwei Abschnitte, nämlich einen Filterabschnitt 71 und einen Stützabschnitt 29. Der Stützabschnitt 29 ist der Unterseite des Bodens 2 des Permeatbehälters 1 im Bereich der genannten Bodenöffnung 16 direkt zugeordnet. Der vom Permeatbehälter 1 abgewandten Seite des Stützabschnittes 29 ist der Filterabschnitt 71 der Filtervorrichtung 20 zugeordnet. Der Filterabschnitt 71 der Filtervorrichtung 20 enthält eine Filtermembrane 28 und der Stützabschnitt 29 stützt diese Membrane 28 ab, wie dies im Nachstehenden noch näher beschrieben sein wird.

Der Stützabschnitt 29 umfasst einen flachen Haltering 44, dessen innerer Durchmesser dem Durchmesser der Öffnung 16 im Behälterboden 2 entspricht oder etwas grösser ist als der Durchmesser der genannten Öffnung 16. Dieser Halteringe 44 ist der Unterseite des Behälterbodens 2 zugeordnet, sodass die Oberseite desselben, im montierten Zustand, auf der Unterseite des Bodens 2 des Permeatbehälters 1 aufliegt. Dieser Haltering 44 kann an die Aussenseite des Bodens 2 des Permeatbehälters 1, wie dies in Fig. 3 angedeutet ist, mit Hilfe einer umlaufenden Schweissnaht 62 (Fig. 3) angeschweisst sein. Dieser Haltering 44 kann an die Aussenseite des Bodens 2 des Permeatbehälters 1 jedoch auch mit Hilfe von Schrauben (nicht dargestellt) angeschlossen sein usw.

Im in Fig. 3 dargestellten Haltering 44 sind parallel zueinander verlaufende Bohrungen bzw. Oeffnungen 45 ausgeführt. Die jeweilige Bohrung 45 geht durch die einander gegenüberliegende Hälften des Ringes 44 hindurch, sodass die jeweilige Bohrung aus zwei Abschnitten 451 und 452 besteht, von welchen je ein Abschnitt 451 bzw. 452 sich in einer der einander gegenüberliegenden Hälften des Ringes 44 befindet. Die sich entsprechenden Abschnitte 451 und 452 der jeweiligen Bohrung 45 liegen auf einer gemeinsame Achse. Durch das jeweilige Paar der Bohrundgshälften 451 und 452 geht ein Stab 43 hindurch. Die äusseren Endflächen der Stäbe 43 sind im jeweiligen Bohrungsabschnitt 451 bzw. 52 fluiddicht abgedichtet, was man beispielsweise durch Schweissen oder Kleben erreichen kann. Die nebeneinander liegenden Stäbe 43 stellen ein rostähnliches Gebilde dar, welches als Stützmittel für die Filtermembrane 28 dienen kann. Wie aus dem vorstehend Dargelegten hervorgeht, befinden sich die Stützmittel 43 oberhalb der Filtermembrane 28, und zwar zwischen dieser Filtermembrane 28 und dem Boden 2 des Permeatbehälters 1.

Die Stützmittel 43 können jedoch auch beispielsweise als ein Gitter ausgeführt sein nicht dargestellt), welches im Inneren des Halteringes 44 befestigt ist. Das Stützgitter 43 überdeckt die gesamte Öffnung im Haltering 44 und die Endpartien der Gitterstäbe sind an der Innenfläche des Halteringes 44 in einer an sich bekannten Weise befestigt. Dies kann beispielsweise durch Schweissen, Kleben oder dgl. erfolgen. Das Stützgitter 43 kann aus Metall oder Kunststoff sein. Die Abmessungen der Maschen im Gitter 43 können im Vergleich mit den Abmessungen der Maschen in der Filtermembrane 28 gross sein, weil der eigentliche Filtervorgang sich an der Filtermembrane 28 abspielt.

Der Filterabschnitt 71 der Filtervorrichtung 20 umfasst einen Grundkörper 21, in welchem ein Hohlraum 22 ausgeführt ist. Dieser Hohlraum 22 ist im Grundkörper 21 des Filterabschnittes 71 von der dem Permeatbehälter 1 zugewandten Oberfläche 49 des Grundkörpers 21 her ausgeführt, wobei dieser Hohlraum 22 auch als Schmutzraum bezeichnet werden kann. Der Hohlraum 22 ist etwa in der Mitte des Grundkörpers 21 angeordnet, sodass sich die genannte Oberfläche 49 des Grundkörpers 21 eigentlich nur auf einen horizontal verlaufenden Rand reduziert, welcher die obere Mündung des Hohlraums 22 umgibt. Der äussere Durchmesser des Grundkörpers 21 des Filterabschnittes 71 entspricht oder gleicht dem äusseren Durchmesser der Halteringe 44 und 45 im Stützabschnitt 29. Die genannte restliche Randfläche 49 des Grundkörpers 21 des Filterabschnittes 71 hat im dargestellten Fall die Form eines flachen Ringes und diese Ringfläche 49 liegt auf der Unterseite des zweiten Halteringes 45 des Stützabschnittes 29 auf. In diesem Bereich kann der Grundkörper 21 des Filterabschnittes 71 mit dem unteren Haltering 45 des Stützabschnittes 29 verbunden sein, und zwar durch Schweissen, durch eine Spannbride oder dgl.

Der Grundkörper 21 des Filterabschnittes 71 kann im wesentlichen scheibenförmig, kelchförmig oder dgl. sein. Die Innenwand 23 des in Fig. 3 dargestellten Schmutzraumes 22 hat die Form des Mantels eines flachen Konusses. Die Innenwand 23 des Schmutzraumes (Hohlraumes) 22 kann jedoch auch die Form eines Klöpperbodens haben. Die grössere Mündung 24 des in Fig. 3 dargestellten Konusses 23 ist dem Permeatbehälter 1 zugewandt und sie liegt in der dem Permeatbehälter 1 zugewandten Oberfläche 49 des Grundkörpers 21. An die kleinere Mündung 25 des konusförmigen Schmutzraumes 22, welche sich an der entgegengesetzten Seite des Grundkörpers 21 befindet, schliesst sich das eine Ende eines Kanals 17 an. Die Wand des Kanals 17 ist praktisch zylinderförmig und die Längsachse dieses Kanals 17 fällt im dargestellten Fall mit der Längsachse A der vorliegenden Einrichtung zusammen. Die andere Mündung des Kanals 17 liegt im dargestellten Beispiel im Bereich der Unterseite 48 des Grundkörpers 21 des Filterabschnittes 71.

Der Durchmesser der oberen bzw. grösseren Mündung des Hohlraumes 22 im Grundkörper 21 des Filterabschnittes 71 entspricht dem Durchmesser der Öffnung 16 im Boden 2 des Behälters 1 sowie dem inneren Durchmesser der Halteringe 44 und 45, sodass das Fluid zwischen dem Hohlraum 22 im Grundkörper 21 des Filterabschnittes 71 und dem Permeatbehälter 1 durch den Stützabschnitt 29 fliessen kann.

Eine ringförmige Vertiefung 26 ist in der Innenwand 23 des Hohlraumes 22 des Filterabschnittes 71 ausgeführt. Diese Vertiefung 26 ist in jenem Bereich der Innenwand 23 ausgeführt, wo diese in die obere Stirnfläche 49 des Grundkörpers 21 übergeht. Die ringförmige Vertiefung 26 ist hinsichtlich des Schmutzraumes 22 konzentrisch angeordnet, sodass die Mittelachse der Vertiefung 26 mit der Hauptachse A der Einrichtung zusammenfällt. Die Vertiefung 26 hat einen Boden 41 in Form eines flachen und senkrecht zur Hauptachse A angeordneten bzw. verlaufenden Ringes und eine kreisförmige Seitenwand 42, welche zum Vertiefungsboden 41 senkrecht steht. In einem vertikalen Schnitt betrachtet, bilden der Boden 41 und die Seitenwand 42 die Schenkel des Buchstabens L. Im Vertiefungsboden 41 ist eine konzentrische Rille ausgeführt, in welcher ein Dichtring 19 eingelegt ist.

Der Filterabschnitt 71 umfasst ferner einen Tragring 27 für die Filtermembrane 28. Dieser Tragring 27 ist in einem vertikalen Schnitt und vergrössert in Fig. 6 dargestellt. Der Tragring 27 weist einen Grundkörper 72 auf, welcher die Form eines flachen Ringes hat. Der äussere Durchmesser dieses Ringgrundkörpers 72 entspricht dem Durchmesser der Seitenwand 42 der Vertiefung 26 im Grundkörper 21 des Filterabschnittes 71. Die Höhe bzw. die Dicke des flachen Ringes 72 entspricht der oder ist etwas kleiner als die Höhe der genannten Seitenwand 42. Folglich passt der Ringgrundkörper 72 in die genannte Vertiefung 26. Die Unterseite des Ringgrundkörpers 72 liegt dabei auf dem Dichtring 19 in der Vertiefung 26. Im in Fig. 6 dargestellten Beispiel ist die Filtermembrane 28 der Oberseite des Tragringes 27 zugeordnet, wobei die Randpartie der Filtermembrane 28 mit der Oberseite des Ringgrundkörpers 72 fest verbunden ist. Dementsprechend ist die Aussenkante der Filtermembrane 28 ebenfalls kreisförmig und mit der Aussenwand 73 des Ringgrundkörpers 72 bündig.

Der ringförmige Grundkörper 72 weist auch eine Innenwand 74 auf (Fig. 6). Im Bereich des Überganges zwischen dieser Innenwand 74 und jener Oberfläche des Ringes 72, auf der die Filtermembrane 28 befestigt ist, gibt es eine umlaufende Kante 75, welche abgerundet ist. Diese Rundung 75 soll verhindern, dass das Material der Filtermembrane 28 während der Einwirkung des Ultraschalls in diesem Bereich des Tragringes 27 nicht beschädigt wird. Es versteht sich, dass der Tragring 27 entweder mit der Filtermembrane 28 nach oben, wie dies in Fig. 6 dargestellt ist, oder mit der Filtermembrane 28 nach unten (nicht dargestellt) in die Vertiefung eingesetzt sein kann.

Die Filtermembrane 28 ist dünn, wobei sie höchstens 2 mm dick sein kann. Sie kann aus einem Kunst- oder Natur- oder Metallgewebe sein oder sie kann als ein gelochtes Kunststoffhäutchen ausgeführt sein. Der Durchmesser der Löcher bzw. der Maschen in dieser Filtermembrane 28 ist von der Grösse der im Fluid schwebenden Partikeln abhängig. Der Durchmesser der Membranlöcher muss kleiner sein als der Durchmesser der Partikeln, damit diese durch die Filtermembrane nicht hindurchgehen können. Der Abstand der gelochten Filtermembrane 28 von der Stirnfläche der Ultraschallquelle 5 liegt zwischen 10 bis 150 mm, und zwar je nach der Art des zu reinigenden Fluids. Dieser Abstand lässt sich mit Hilfe der verstellbaren Tragvorrichtung 6 auf den jeweils gewünschten Wert einstellen.

In der ringförmigen Oberfläche 49 des Grundkörpers 21 des Filterabschnittes 71 ist eine weitere umlaufende Rille 47 ausgeführt, in welcher ein weiterer O-Ring 18 eingelegt ist. Der innere Durchmesser dieser Rille 47 ist grösser als der Durchmesser der Seitenwand 42 der Vertiefung 26, sodass die Rille 47 ausserhalb dieser Vertiefung 26 liegt. Der untere Haltering 45 liegt auf dem genannten Dichtring 18 auf. Falls die Filtermembrane 28 auf der Oberseite des Tragringes 27 liegt, dann ist ein kleiner Abstand zwischen der Oberseite der Filtermembrane 28 und der Unterseite der Stützmittel 43 vorhanden. Dieser ist im wesentlichen durch die Dicke des unteren Halteringes 45 gegeben. Wegen diesem so kleinen Abstand sind die Stützmittel 43 in der Lage, die dünne Filtermembrane 28 mechanisch zu stützen. Der genannte Abstand kann vergrössert werden, indem man den Tragring 27 mit der Filtermembrane 2 nach unten in die Vertiefung 26 einlegt, wie dies vorstehend bereits erwähnt wurde.

Die vorliegende Einrichtung umfasst ferner eine Verteilvorrichtung 30. Diese enthält ein Leitungsstück 31, welches die Form eines T-Stückes hat. Dieses T-Stück 31 umfasst einen ersten bzw. durchgehenden Kanal 32 sowie einen zweiten und an den durchgehenden Kanal 32 angeschlossenen Kanal 33. Dieser zweite Kanal 33 ist an den ersten. Kanal 32 zwischen den Endpartien dieses ersten Kanals 32 angeschlossen, wobei der zweite Kanal 33 zum durchgehenden Kanal 32 praktisch senkrecht stehen kann (Fig. 1 und 8). Dieser zweite Kanal 33 kann auch als Einlassstutzen bezeichnet werden, weil das zu filtrierende Fluid durch diesen Stutzen 33 in die vorliegende Einrichtung eingeführt werden kann.

In einer weiteren Ausführungsform dieser Erfindung (nicht dargestellt) ist dieser Abschnitt der vorliegenden Einrichtung so ausgeführt, dass der zweite Kanal 33 nicht an den ersten Kanal 32 sondern direkt an den Grundkörper 21 der Filtervorrichtung 20 angeschlossen ist. Zu diesem Zweck weist die Wand des Grundkörpers 21 noch einen zweiten Durchlass auf, welcher dem bereits beschriebenen Durchlass 17 in dieser Wand entspricht. An die äussere Mündung des zweiten Durchlasses ist der zweite Kanal 33 angeschlossen. Die andere Mündung dieses zweiten Durchlasses liegt in der Wand 23 des Schmutzraumes 22.

Im Einlassstutzen 33 befindet sich ein erstes Absperrventil 34, welches zweckmässigerweise durch die Steuervorrichtung dieser Einrichtung elektronisch steuerbar ist. Im Einlassstutzen 33 ist auch ein Druckmesser 35 angeordnet. Dieser Druckmesser 35 ist an die Steuervorrichtung der vorliegenden Einrichtung ebenfalls angeschlossen und zwar als Druckgeber. An die freie Endpartie des Einlassstutzens 33 ist der Auslass einer Pumpe 65 angeschlossen, welche dem Druckgeber 35 vorgeschaltet ist. Die in Fig. 8 dargestellte Einrichtung weist zwei hintereinander geschaltete Pumpen 65 und 651 auf. Der Druckmesser 35 kann den am Auslass der Pumpe 65 vorhandenen Druck messen.

An den Einlass der Pumpe 65 ist ein Schmutztank 66 angeschlossen, welcher zur Aufnahme eines verschmutzten Bearbeitungsfluids dient. Der Schmutztank 66 kann auch als ein Absetztank ausgebildet sein. Das Fluid kann durch die Pumpe 65 bzw. auch 651 aus dem Absetztank 66 in den Einlassstutzen 33 des Verteilstückes 30 gepumpt werden.

Gemäss einer weiteren Ausführungsform der vorliegenden Einrichtung kann das Absperrventil 34 wegfallen, wenn die Konstruktion der Pumpe 65 bzw. 651 so ausgewählt ist, dass kein Rückfluss des Fluids durch die Pumpe bzw. Pumpen möglich ist.

Die erste Endpartie des Durchlaufkanals 32 ist an die kleinere Grundfläche 25 des Schmutzraumes 22 in der Filtervorrichtung 20 fluidmässig angeschlossen, sodass das Fluid zwischen dem T-Stück 31 und der Filtervorrichtung 20 fliessen kann. In der zweiten bzw. entgegengesetzt liegenden Endpartie des Durchlaufkanals 32 befindet sich ein zweites Absperrventil 38, welches zweckmässigerweise durch die Steuervorrichtung dieser Einrichtung ebenfalls elektronisch steuerbar ist. An den Auslass 39 des Durchlaufkanals 32 können ein Filtersack, eine Filterkammerpresse oder ein Zentrifugalseperator angeschlossen sein. Im in Fig. 7 und 8 dargestellten Beispiel ist dem Auslass 39 ein Sammelbehälter 67 nachgeschaltet, in welchem die vom Fluid getrennten Partikel vorübergehend aufbewahrt werden können.

Am Anfang eines Filterzyklusses wird das zweite Absperrventil 38 geschlossen und das erste Absperrventil 34 geöffnet. Die Pumpe 65 bzw- 651 pumpt das verschmutzte Fluid aus dem Schmutztank 66 in den Einlassstutzen 33. Von hier gelangt das Fluid in den Durchlaufkanal 32. Da das zweite Absperrventil 38 geschlossen ist, kann das Fluid im Durchlaufkanal 32 nur aufwärts zum Schmutzraum 22 der Filtervorrichtung 20 fliessen. Von hier gelangt das Fluid durch die Filtermembrane 28, durch die Stützmittel 29 und die Bodenöffnung 16 in den Permeattank 1. Die Partikel bleiben an der Unterseite der Filtermembrane 28 hängen, während das von den Partikeln befreite Fluid durch die Stützmittel 43 und durch die Bodenöffnung 16 im Permeatbehälter 1 in diesen gelangt.

Da die Pumpe 65 bzw. 651 das Fluid in die Verteilvorrichtung 30 während einer bestimmten Zeitspanne weiterhin pumpt, steigt der Spiegel 70 des Permeats im Tank 1 empor. Nachdem der Permeatspiegel die Auslassöffnung 4 im Permeattank 1 erreicht hat, tritt das Permeat aus dem Tank 1 durch diese Öffnung 4 heraus. Das filtrierte Fluid fliesst somit nach dem Filtern um den Ultraschallschwinger 5 durch den Auslassstutzen 4 in einen Saubertank (nicht dargestellt). Aus diesem Saubertank kann die Bearbeitungsmaschine das gereinigte Fluid für ihren Betrieb beziehen.

Während dem genannten Arbeitszyklus misst der Druckmesser 35, vorteilhaft ununterbrochen, den Druck am Auslass der Pumpe 65 bzw. 651. Während dem Arbeitszyklus wird die Schicht der Partikel an der Unterseite der Filtermembrane 28 immer dicker. Je dicker diese Partikelschicht ist, um so grösser ist der Widerstand, welchen diese Partikelschicht dem zur Filtermembrane 28 beförderten, verschmutzten Fluid entgegensetzt. Nachdem die Partikelschicht eine so grosse Dicke erreicht hat, dass der Druck in der Verteilvorrichtung 30 einen vorgegebenen Grenzwert erreicht hat, gibt der Druckmesser 35 ein entsprechendes Signal an die Steuervorrichtung ab. Dies deswegen, weil es erforderlich ist, die Partikelschicht von der Filtermembrane 28 zu entfernen.

Dies wird in der Weise durchgeführt, dass der Betrieb der Pumpe 65 bzw. 651 unterbrochen und dass erste Ventil 34 geschlossen wird. Das zweite Ventil 38 wird geöffnet, sodass die in der Verteilvorrichtung 30 vorhandene Flüssigkeit nunmehr nur abwärts durch den Durchlaufkanal 32 fliessen kann. Die Ultraschallquelle 5, welche durch die Bodenöffnung 2 der Filtermembrane 28 gegenübersteht, wird in Betrieb genommen. Der Ultraschall bringt die an der Unterseite der Filtermemebrane 28 vorhandenen Partikel zum Schwingen. Ein kleiner Teil des Permeats strömt dabei aus dem Permeattank 1 durch die Filtermembrane 28 zurück in die Verteilvorrichtung 30 und reisst dabei jene Partikel der Schmutzschicht an der Unterseite der Filtermembrane 28 mit sich, welche durch die Einwirkung des Ultraschalls in eine schwingende Bewegung versetzt worden sind.

Bei der erwähnten weiteren Ausführung der vorliegenden Einrichtung, welche kein erstes Absperrventil 34 hat, genügt es, wenn nur der Betrieb der Pumpe 65 bzw. 651 unterbrochen, das Ausflussventil 38 geöffnet und der Ultraschallschwinger 5 in Betrieb genommen wird.

Da das durch die Filtermembrane 28 strömende Permeat unter dem Druck der Permeatsäule im Permeattank 1 steht, können die durch den Ultraschall in Schwingung versetzte Partikel nicht durch die Filtermembrane 28 durchgewirbelt werden sondern sie werden während einer kurzen Zeitspanne von der Filtermembrane 28 weggerissen und durch den Durchflusskanal 32 mitgerissen. Die Fluidsäule im Permeattank 1 erbringt nämlich einen bestimmten wenn auch geringen Rückfliessdruck des Permeats auf die Filtermembrane 28. Wenn dies als zweckmässig erscheint, dann kann im durch den Deckel 64 abgedichten Permeattank 1 ein leichter Ueberdruck erzeugt werden. Dieser Ueberdruck verursacht einen intensiveren Rückfluss des Permeats durch die Filtermembrane 28 und somit auch eine beschleunigte Entfernung der Partikel von der Unterseite der Filtermembrane 28. Zugleich wirkt auch die Ultraschallschwingung auf die Partikel an der Filtermembrane 28 ein, was die Ablösung der Schmutzpartikel von der Filtermembrane 28 unterstützt. Nachdem die Filtermembrane 28 von den Partikeln zumindest weitgehend befreit wurde, wird das zweite Ventil 38 geschlossen und das erste Ventil 34 wird wieder geöffnet. Die Pumpe 65 bzw. 651 wird wieder in Betrieb genommen und ein weiterer Filterzyklus kann anfangen.

Bei der Ausführung der vorliegenden Einrichtung, welche in Fig. 7 und 8 dargestellt ist, ist die Funktion der Einrichtung im wesentlichen gleich wie vorstehend beschrieben. Da diese Einrichtung jedoch mehrere Einheiten, d.h. mehrere Filtervorrichtungen 20 usw. aufweist, ist diese Einrichtung leistungsfähiger als die Ausführung der Einrichtung gemäss Fig. 1.

## Patentansprüche

1. Verfahren zur Filtration eines Materialpartikel enthaltenden Fluids, in welchem das Fluid durch eine horizontal angeordnete Filtermembrane (28) geführt wird, wobei die Materialpartikel an der Unterseite der Filtermembrane (28) gesammelt werden, und in welchem eine Rückspülung der Filtermembrane (28) mit einem Teil des bereits gefilterten Fluids nach dem Erreichen einer vorgegebenen Konzentration von Partikeln in der Schicht an der Unterseite der Filtermembrane (28) durchgeführt wird, **dadurch gekennzeichnet, dass** die gesamte Menge des zugeführten und die Materialpartikel enthaltenden Fluids von unten nach oben durch die Filtermembrane (28) geführt wird, dass während des Rückspülprozesses auf die sich an der Unterseite der Filtermembrane (28) befindlichen Partikel mit Ultraschall von oben her eingewirkt wird und dass die von der Unterseite der Filtermembrane gelösten Partikel abwärts zum Auslass (39) geführt werden.

2. Verfahren nach Patentanspruch 1, **dadurch gekennzeichnet, dass** ein Druck auf die Partikel während des Rückspülprozesses von oben her ausgeübt wird und dass dieser Druck durch die Säule des bereits gereinigten Fluids über der Membrane (28) verursacht wird.

3. Verfahren nach Patentanspruch 2, **dadurch gekennzeichnet, dass** ein zusätzlicher Überdruck über dem Spiegel (70) des bereits gereinigten Fluids erzeugt wird.

4. Verfahren nach Patentanspruch 1, **dadurch gekennzeichnet, dass** der Rückspülprozess mit einem Teil des bereits gereinigten Fluids, unter gleichzeitiger Einwirkung von Ultraschall eingeleitet wird, nachdem ein festgelegter Druck von beispielsweise 0.3 bis 3 bar im Bereich der Unterseite der Filtermembrane (28) festgestellt worden ist.

5. Verfahren nach Patentanspruch 1, **dadurch gekennzeichnet, dass** das zum Auslass (39) geführte und eine konzentrierte Menge von Materialpartikel enthaltende Fluid in eine Sedimentationswanne (67), in einen Filtersack, in eine Filterkammerpresse oder in einen Zentrifugalseperator geführt wird.

6. Einrichtung zur Durchführung des Verfahrens nach Patentanspruch 1, **dadurch gekennzeichnet, dass** ein Behälter (1) für die Aufnahme des gereinigten Fluids vorgesehen ist, dass zumindest eine Öffnung (16) im Boden (2) dieses Aufnahmebehälters (1) vorhanden ist, dass eine Filtervorrichtung (20) sich auf der Unterseite des Behälterbodens (2) befindet, der genannten Behälteröffnung (16) vorgeschaltet ist und einen Hohlraum (22) aufweist, dass eine Filtermembrane (28) sich im Hohlraum (22) der Filtervorrichtung (20) befindet, zum Behälterboden (2) parallel verläuft und der Öffnung (16) im Boden (2) des Permeatbehälters (1) zugeordnet ist, dass eine Verteilvorrichtung (30) der Filtervorrichtung (20) vorgeschaltet ist, dass diese Verteilvorrichtung (30) einen ersten Kanal (32) und einen zweiten Kanal (33) umfasst, dass eine der Endpartien des ersten Kanals (32) an die Filtervorrichtung (20) angeschlossen ist, dass die andere Endpartie des ersten Kanals (32) an einen Auslass (39) angeschlossen ist, welcher sich unterhalb der Filtervorrichtung (20) befindet, dass ein Absperrventil (38) in dieser zweiten Endpartie des ersten Kanals (32) angeordnet ist, dass eine der Endpartien des zweiten Kanals (33) an den Hohlraum (22) in der Filtervorrichtung (20) angeschlossen ist und dass eine Ultraschallquelle (5) oberhalb der Filtervorrichtung (20) im Aufnahmebehälter (1) angeordnet ist.

7. Einrichtung nach Patentanspruch 6, **dadurch gekennzeichnet, dass** die Filtervorrichtung (20) einen Grundkörper (21) hat, in welchem der Hohlraum (22) ausgeführt ist, dass dieser Hohlraum (22) zwei übereinander liegende Mündungen (25,24) hat, dass eine dieser Mündungen (25) kleiner ist als die andere Mündung (24), dass die Begrenzungsfläche (23) des Hohlraums (22), die sich zwischen den Mündungen (25,24) erstreckt, konusförmig ist oder die Form eines Klöpperbodens aufweisen kann, dass der Hohlraum (22) so angeordnet ist, dass die grössere Mündung (24) desselben der Öffnung (16) im Boden (2) des Aufnahmebehälters (2) zugewandt liegt, dass die Filtermembrane (28) zwischen dieser grösseren Mündung (24) und dem Behälterboden (2) angeordnet ist, dass ein Durchlass (17) in der Wand des Grundkörpers (21) der Filtervorrichtung (20) ausgeführt ist, dass eine erste Mündung dieses Durchlasses (17) an die kleinere Mündung (25) des Hohlraumes (22) in der Filtervorrichtung (20) angeschlossen ist und dass die zweite Mündung des Durchlasses (17) an der Aussenseite des Grundkörpers (21) der Filtervorrichtung (20) liegt.

8. Einrichtung nach Patentanspruch 7, **dadurch gekennzeichnet, dass** die Filtervorrichtung (20) ferner Stützmittel (43) für die Filtermembrane (28) aufweist, dass diese Stützmittel (43) zwischen der Filtermembrane (28) und der Bodenöffnung (16) angeordnet sind und dass diese Stützmittel (43) als ein Satz von Stäben oder als ein Gitter ausgeführt werden können.

9. Einrichtung nach Patentanspruch 7, **dadurch gekennzeichnet, dass** die Verteilvorrichtung (30) ein T-Stück (31) umfasst, dass der Balken dieses T-Stücks (31) den ersten Kanal (32) der Verteilvorrichtung (30) darstellt, dass der Stiel des T-Stücks (31) den zweite Kanal (33) der Verteilvorrichtung (30) darstellt, dass dieser zweite Kanal (33) in den ersten Kanal (32) einerends mündet und dass die erste Endpartie des ersten Kanals (32) an jene Mündung des Durchlasses (17) angeschlossen ist, welche sich an der Aussenseite des Grundkörpers (21) der Filtervorrichtung (20) befindet.

10. Einrichtung nach Patentanspruch 7, **dadurch gekennzeichnet, dass** ein zweiter Durchlass in der Wand des Grundkörpers (21) der Filtervorrichtung (20) ausgeführt ist, dass eine der Mündungen dieses zweiten Durchlasses in der Begrenzungsfläche (23) des Hohlraumes (22) in der Filtervorrichtung (20) liegt und dass der zweite Kanal (33) der Verteilvorrichtung (30) an jene Mündung dieses zweiten Durchlasses angeschlossen ist, welcher an der Aussenseite des Grundkörpers (21) der Filtervorrichtung (20) liegt.

11. Einrichtung nach Patentanspruch 6, **dadurch gekennzeichnet, dass** der Behälter (1) mit einem Deckel (64) versehen ist, welcher auf dem Behälter (1) luftdicht aufgesetzt ist, und dass Mittel vorgesehen sind, mit deren Hilfe ein Überdruck im Inneren eines solchen Behälters (1,64) erzeugt werden kann.

12. Einrichtung nach Patentanspruch 6, **dadurch gekennzeichnet, dass** ein Tank (66) vorgesehen ist, in welchem das die Materialpartikel enthaltende Fluid gesammelt werden kann, dass eine Pumpe (65, 651) an diesen Schmutztank (66) angeschlossen ist, dass die Austrittspartie dieser Pumpe (65,651) an eine zweite Endpartie des zweiten Kanals (33) angeschlossen ist, dass ein Druckmesser (35) in diesem Kanal (33) angeordnet ist, dass ein Absperrventil (34) im Kanal (33) angeordnet sein kann und dass der Auslass (39) in den Schmutztank (66) mündet.

13. Einrichtung nach Patentanspruch 6, **dadurch gekennzeichnet, dass** eine hohle Tragvorrichtung (6) im Aufnahmebehälter (1) über der Filtervorrichtung (20) angeordnet ist, dass ein Rahmen (10) an die der Filtervorrichtung (20) zugewandte Endpartie der Tragvorrichtung (6) fluiddicht angeschlossen ist, dass eine Membrane (14) elastisch und fluiddicht im Rahmen (10) gehalten ist dass die Ultraschallquelle (5) auf der Oberseite der Membrane (14) befestigt ist, dass die Ultraschallquelle (5) je nach dem zu reinigenden Fluid auf einen festen, senkrechten Abstand zur Filtermembrane (28) eingestellt sein kann und dass dieser Abstand zwischen 10mm und 150 mm betragen kann.

## Claims

1. Process for the filtration of a fluid containing material particles, in which the fluid is led through a horizontal arranged filter diaphragm (28), whereby the material particles are collected at the lower surface of the filter diaphragm (28), and in which a back flushing of the filter diaphragm (28) with a part of the fluid already filtered is accomplished after reaching a given concentration of particles in the layer at the lower surface of the filter diaphragm (28), **characterized in that** the entire quantity of the supplied and the material particles containing fluid are led from down upwards through the filter diaphragm (28), that the particles, present on the lower surface of the filter diaphragm (28), are affected by ultrasonics acting downwards during the back rinsing process, and that the particles detached from the lower surface of the filter diaphragm are led downwards to the discharge opening (39).

2. Process according to claim 1, **characterized in that** a pressure is exerted from the top on the particles during the back rinsing process and that this pressure is caused by the column of the already cleaned fluid being over the diaphragm (28).

3. Process according to claim 2, **characterized in that** an additional positive pressure is created over the level (70) of the fluid already cleaned.

4. Process according to claim 1, **characterized in that** the back rinsing process with a part of the fluid already cleaned is started together with the acting of the ultrasonics after a fixed pressure of for example 0,3 to 3 bar was determined in the region of the lower surface of the filter diaphragm (28).

5. Process according to claim 1, **characterized in that** the fluid which is led to the discharge opening (39) and which contains a concentrated quantity of material particles is led into a sedimentation tub (67), into a filter bag, into a filter chamber press or into a centrifugal separator.

6. Apparatus for carrying out the process according to claim 1, **characterized in that** a container (1) for taking in the cleaned fluid is provided, that at least one opening (16) is present in the bottom (2) of this receptacle (1), that a filter device (20) is placed on the lower side of the container bottom (2) which device has a hollow space (22) and is connected in series with said container opening (16), that a filter diaphragm (28) is foreseen which is placed in the hollow space (22) of the filter device (20) which extends parallel to the container bottom (2) and which is assigned to the bottom (2) of the permeate container (1), that a distribution device is connected in series with the filter device (20), that this distribution device (30) comprises a first channel (32) and a second channel (33), that one of the end portion of the first channel (32) is attached to the filter device (20), that the other end portion of the first channel (32) is connected to a discharge opening (39) which is placed underneath the filter device (20), that a stop valve (38) is arranged in this second end portion of the first channel (32), that one of the end portions of the second channel (33) is connected to the cavity (22) in the filter device (20) and that an ultrasonic source (5) is arranged above the filter device (20) in the receptacle (1).

7. Apparatus according to claim 6, **characterized in that** the filter device (20) has a main body (21) in which said cavity (22) is carried out, that this cavity (22) has two orifices (22,24) lying one above the other, that one of these orifices (22) is smaller than the other orifice (24), that the delimitation surface (23) of the cavity (22), which extends between said orifices (22,24), is cone shaped or can have the form of a Kloepper bottom, that the cavity (22) is so arranged that the larger orifice (24) faces the opening (16) in the bottom (2) of the receptacle (1), that the filter diaphragm (28) is placed between this larger orifice (24) and the receptacle bottom (2), that a passage (17) is in the wall of the main body (21) of the filter device (20), that a first orifice of this passage (17) is connected to the smaller orifice (25) of the cavity (22) in the filter device (20) and that the second orifice of the passage (17) is placed on the exterior side of the main body (21) of the filter device (20).

8. Apparatus according to claim 7, **characterized in that** the filter device (20) has also supporting means (43) for the filter diaphragm (28), that these supporting means (43) are arranged between the filter diaphragm (28) and the bottom opening (16) and that these supporting means (43) are carried out as a set of staffs or as a grid.

9. Apparatus according to claim 7, **characterized in that** the distribution device (30) comprises a T-fitting (31), that the bar of this T-fitting (31) represents the first channel (32) of the distribution device (30), that the handle of the T-fitting (31) represents the second channel (33) of the distribution device (30), that one end of this second channel (33) opens into the first channel (32) and that the first end portion of the first channel (32) is attached to that one orifice of the passage (17) which is placed at the exterior side of the main body (21) of the filter device (20).

10. Apparatus according to claim 7, **characterized in that** a second passage is carried out in the wall of the main body (21) of the filter device (20), that one of the orifices of this second passage lies in the delimitation surface (23) of the cavity (22) in the filter device (20) and that the second channel (33) of the distribution device (30) is attached to that orifice of this second passage, which is placed on the exterior side of the main body (21) of the filter device (20).

11. Apparatus according to claim 6, **characterized in that** the container (1) is provided with a cover (64) which is put on the container (1) hermetically tight and that means are provided by aid of which a positive pressure can be produced in the interior of such a container (1,64).

12. Apparatus according to claim 6, **characterized in that** a tank (66) is provided in which the fluid containing the material particles can be collected, that a pump (65, 651) is connected to this dirt tank (66), that the output portion of this pump (65,651) is connected to a second end portion of the second channel (33), that a pressure gauge (35) is arranged in this channel (33), that a stop valve (34) can be arranged in the inlet connecting piece (33) and that the discharge opening (39) opens into the dirt tank (66).

13. Apparatus according to claim 6, **characterized in that** a hollow carrying device (6) is arranged in the receptacle (1) above the filter device (20), that a frame (10) is airtight attached to that one end portion of the carrying device (6) which faces the filter device (20), that a diaphragm (14) is held flexible and fluid tight in the frame (10), that the ultrasonic source (5) can be placed in a certain vertical distance from the filter diaphragm (28) depending upon the fluid which is to be cleaned, and that said distance can amount between 10 mm and 150 mm.

## Revendications

1. Une procédure de filtration d'un fluide contenant d'un particule de matériel, dans lequel le fluide coule par une membrane de filtre, qui est disposéé (28) horizontalement, au quelle cas les particules de matériel au dessous de la membrane de filtre (28) sont rassemblées, et dans lequel un rérinçage de la membrane de filtre (28) avec une partie du fluide déjà filtré est mis en oeuvre après la réalisation d'une concentration alléguée de particules dans la couche au dessous de la membrane de filtre (28) est efféctué, **caractérisé que** la quantité totale du fluide avec les particules de matérieaux sont coulés d'en bas vers le haut par la membrane de filtre (28) qu'influencé pendant le réprocessus sur lui les particules présentes au dessous de la membrane de filtre (28) avec un ultra-son d'en haut loin et que ceux membrane de filtre particule résolue à l'échappement (39) sont coulé vers le bas.

2. Procédure selon la revendication 1, **caractérisé en ce qu'**un pression est faite d'en haut loin sur les particules pendant le réprocessus et que cette pression est causée par la colonne du fluide déjà nettoyé sur la membrane (28).

3. Procédure selon la revendication 2, **caracterisé en ce qu'**un surpression supplémentaire sur le miroir (70) du fluide déjà nettoyé est produite.

4. Procédure selon la revendication 1, **caractérisé en ce qu'**un le réprocessus avec une partie du fluide, déjà nettoyé, est commencé sous l'effet simultané d'un ultra-son, après qu'une pression spécifique de par exemple 0.3 à 3 bar été constatée dans le secteur du dessous de la membrane de filtre (28).

5. Procédure selon la revendication 1, **caracterisé en ce que** le fluide coule contenante à l'échappement (39) une quantité concentrée des particules de matériel est conduit dans un baquet de sédimentation (67), dans un sac de filtre, dans une presse de chambre de filtre ou dans un seperateur centrifugal.

6. Procédure selon la revendication 1, **caractérisé en ce qu'**une installation de source d'ultra-son (5), celui qu'est assigné à la membrane de filtre (28), alors qu'un récipient (1) est prévu pour l'admission du fluide nettoyé qu'au moins une ouverture (16) dans le sol (2) de ce récipient d'admission (1) existe qu'un dispositif de filtre (20) se trouve sur le dessous du sol de récipient (2) et est relié l'ouverture de récipient (16) citée qu'un dispositif de distribution (30) du dispositif de filtre (20) est relié que ce dispositif de distribution (30) un premier canal (32) et un deuxième canal (33) couvert qu'une des portions finales du premier canal (32) est attachée au dispositif de filtre (20) que l'autre partie finale du premier canal (32) dessus, au-dessous du dispositif de filtre (20), il trouve qu'une soupape d'arrêt (38) dans cette deuxième partie finale du premier canal (32) est disposée qu'une des parties finales du deuxième canal (33) est attachée à une cavité (22) dans le dispositif de filtre (20) et que la source d'ultra-son (5) est disposée au-dessus du dispositif de filtre (20) dans le récipient d'admission (1).

7. Procédure selon la revendication 6, **caracterisé en ce qu'**un que le dispositif de filtre (20) a une base (21) que dans cette base (21) la cavité (22) est expliquée que cette cavité (22) montre deux embouchures (22,24) se trouvant l'un sur l'autre qu'une de ces embouchures (22) plus petit est que l'autre embouchure (24) que la surface de limitation (23) de la cavité (22) qui s'élargit entre ses embouchures (22,24), an une forme d'un cônes ou peut montrer la forme d'un fond de koeppel que la cavité (22) est disposée de telle sorte que la plus grande embouchure (24) de la même de l'ouverture (16) dans le fond (2) du récipient d'admission (2) se trouve tourné que la membrane de filtre (28) entre cette plus grande embouchure (24) et le fond de récipient (21) on explique le dispositif de filtre (20) qu'une première embouchure de ce passage (17) est attachée à la plus petite embouchure (25) de la cavité (22) dans le dispositif de filtre (20) et que la deuxième embouchure du passage (17) tient à l'extérieur de la base (21) du dispositif de filtre (20).

8. Procédure selon la revendication 7, **caracterisé en ce que** le dispositif de filtre (20) en outre le moyen de soutien (43) pour la membrane de filtre (28) montrent que ces moyens de soutien (43) entre la membrane de filtre (28) et l'ouverture du fond (16) sont disposés et que ces moyens de soutien (43) comme une phrase par le personnel ou comme un trellis peuvent être exportés.

9. Procédure selon la revendication 7, **caracterisé en ce que** le dispositif de distribution (30) aboutit d'un morceau avec une form d'un t couvert que la poutre de ce morceau avec une form d'un t représente le premier canal (32) du dispositif de distribution (30) que la poignée d'un morceau avec une form d'un t, représente le deuxième canal (33) du dispositif de distribution (30) que ce deuxième canal (33) au premier canal (32) einerends et que la première portion finale du premier canal (32) est attachée à cette embouchure du passage (17) qui se trouve à l'extérieur de la base (21) du dispositif de filtre (20).

10. Procédure selon la revendication 7, **caracterisé en ce qu'**un deuxième passage est expliqué dans la paroi de la base (21) du dispositif de filtre (20) qu'une des embouchures de ce deuxième passage dans la surface de limitation (23) de la cavité (22) se trouve dans le dispositif de filtre (20) et que le deuxième canal (33) du dispositif de distribution (30) est attaché à cette embouchure de ce deuxième passage qui tient à l'extérieur de la base (21) du dispositif de filtre (20).

11. Procédure selon la revendication 6, **caractérisé en ce que** le récipient (1) est équipé d'une couverture (64) qui est placée hermétiquement sur le récipient (1), et que des moyens, avec l'aide desquels une surpression à l'intérieur d'un tel récipient (1,64) peut être produite sont prévus.

12. Procédure selon la revendication 6, **caracterisé en ce qu'**un réservoir (66) est prévu, dans lequel la particule de matériel qu'une pompe (à ce réservoir de saleté (66) est attaché à 65, 651) qu'on attache la portion de départ à cette pompe (65,651) à une deuxième portion finale du deuxième canal (33) qu'un manomètre (35) dans ce manchon d'entrée (33) est disposé qu'une soupape d'arrêt (34) dans le manchon d'entrée (33) peut être disposée et que l'échappement (39) aboutit au réservoir de saleté (66).

13. Procédure selon la revendication 6 **caracterisé en ce qu'**un dispositif de transport (6) creux dans le récipient d'admission (1) sur le dispositif de filtre (20) est disposé qu'un cadre (10) est attaché au dispositif de filtre (20) étroitement qu'une membrane (14) est tenue élastiquement et étroitement dans le cadre (10) que la source d'ultra-son (5) sur la surface supérieure de la membrane (14) est attachée que la source d'ultra-son (5) peut être ajustée selon le fluide à nettoyer sur une distance ferme et verticale à la membrane de filtre (28) et que cette distance peut s'élever entre 10 mm et 150 mm.
